# EUROPÄISCHE PATENTANMELDUNG

(11) **EP 0 628 464 A1**
(43) Veröffentlichungstag der Anmeldung: **14.12.1994**
(21) Anmeldenummer: 94108870.0
(22) Anmeldetag: 09.06.1994
(51) Int. Cl.: B62B 5/04

(54) **Von Hand bewegbarer Transportwagen mit Bremsvorrichtung**

(30) Priorität: 11.06.1993 DE 9308724 U; 29.07.1993 DE 9311364 U
(71) Anmelder: Wanzl GmbH & Co. Entwicklungs-KG, D-89336 Leipheim (DE)
(72) Erfinder: Schurr, Eberhard, D-89340 Leipheim (DE); Wanzl, Rudolf, D-89340 Leipheim (DE)

(57) **Zusammenfassung**

Die Erfindung betrifft einen von Hand bewegbaren Transportwagen (1), mit wenigstens einer Abstelleinrichtung (5) für zu transportierende Güter, mit einer Schiebeeinrichtung (6), mit einer auf wenigstens eine der hinteren Fahrrollen (4) einwirkenden Bremseinrichtung (15) und mit Kraftübertragungsmitteln (22), die mit der Bremseinrichtung (15) und mit einer Betätigungsvorrichtung (12) so verbunden sind, daß durch Verschwenken der Betätigungsvorrichtung (12) um eine horizontale Achse die auf die wenigstens eine hintere Fahrrolle (4) einwirkenden Bremskräfte in ihrer Intensität veränderbar sind.
Das Wesen der Erfindung besteht darin, daß die Betätigungsvorrichtung (12) in an sich bekannter Weise durch die Schiebeeinrichtung (6) gebildet ist, wobei die zum Verschwenken der Betätigungsvorrichtung (12) vorgesehene horizontale Achse der Längsachse (11) der Schiebeeinrichtung (6) entspricht und daß die Bremseinrichtung (15), die Schiebeeinrichtung (6) und die Kraftübertragungsmittel (22) Bestandteil eines hydraulisch wirkenden Steuerungssystems (23) sind, das wenigstens zwei Hydraulikzylinder (16, 17) aufweist, die außerhalb der Schiebeeinrichtung (6) am Transportwagen (1) angeordnet sind.

## Beschreibung

Die Erfindung betrifft einen von Hand bewegbaren Transportwagen, mit wenigstens einer Abstelleinrichtung für zu transportierende Güter, mit einer Schiebeeinrichtung, mit einer auf wenigstens eine der hinteren Fahrrollen einwirkenden Bremseinrichtung und mit Kraftübertragungsmitteln, die mit der Bremseinrichtung und mit einer Betätigungsvorrichtung so verbunden sind, daß durch Verschwenken der Betätigungsvorrichtung um eine horizontale Achse die auf die wenigstens eine hintere Fahrrolle einwirkenden Bremskräfte in ihrer Intensität veränderbar sind.

Transportwagen dieser Art sind in den Patentschriften US 4,018,449, US 4,840,388, US 4,976,447 und CH 262 695 näher beschrieben. Bei diesen Transportwagen führen von der Betätigungsvorrichtung entweder Bremsgestänge oder Seilzüge zur Bremseinrichtung. Die Betätigungsvorrichtungen selbst werden entweder durch schwenkbare Griffe, schwenkbare Hebel oder Hülsen gebildet, wobei die schwenkbaren Griffe als zweiarmige Hebelkonstruktionen gestaltet sind. Die genannten Transportwagen weisen Nachteile auf, die darin bestehen,
- daß die Bremsgestänge oft den baulichen Gegebenheiten der Transportwagen angepaßt werden müssen und so als abgewinkelte, kompliziert gestaltete Gebilde von der Betätigungsvorrichtung zur Bremseinrichtung führen oder
- daß die Seilzüge in Rohren ohne Umlenkrollen geführt werden, so daß es an den Seilzügen und an den Rohren zwangsläufig zur Bildung von Scheuerstellen kommt, die sich insbesondere auf die Seilzüge negativ auswirken und/oder
- daß der Krafthebel der Betätigungsvorrichtungen recht kurz gehalten werden muß, um die Schiebeeinrichtung nicht unförmig und zu groß werden zu lassen, so daß die von Hand zum Bremsen aufzubringende Kraft verhältnismäßig groß ist.

Die Aufgabe der Erfindung besteht darin, gattungsgemäße Transportwagen so weiterzuentwickeln, daß die eben geschilderten Nachteile vermieden werden.

Entscheidet man sich für eine Betätigungsvorrichtung in Form einer auf der Schiebeeinrichtung befindlichen Hülse, so wird zur Lösung der Aufgabe vorgeschlagen, daß die Bremseinrichtung, die Hülse und die Kraftübertragungsmittel Bestandteil eines hydraulisch wirkenden Steuerungssystems sind, das wenigstens zwei Hydraulikzylinder aufweist, wobei einer der Hydraulikzylinder innerhalb der Schiebeeinrichtung und der wenigstens eine weitere Hydraulikzylinder außerhalb der Schiebeeinrichtung am Transportwagen angeordnet ist.

Ist hingegen die Schiebeeinrichtung selbst als Betätigungsvorrichtung vorgesehen, so trägt zur Lösung der Aufgabe bei, daß die zum Verschwenken der Betätigungsvorrichtung vorgesehene horizontale Achse der Längsachse der Schiebeeinrichtung entspricht und daß die Bremseinrichtung, die Schiebeeinrichtung und die Kraftübertragungsmittel Bestandteil eines hydraulisch wirkenden Steuerungssystems sind, das wenigstens zwei Hydraulikzylinder aufweist, die außerhalb der Schiebeeinrichtung am Transportwagen angeordnet sind.

Die vorgeschlagenen Transportwagen vermeiden in vorteilhafter Weise ein
- Bremsgestänge, welches möglicherweise abzuwinkeln wäre;
- Seilzüge, die scheuern könnten und
- Betätigungsvorrichtungen, bei denen die Gefahr einer schweren Bedienbarkeit besteht.
Weil bei den erfindungsgemäßen Transportwagen in zweckmäßiger Weise ein hydraulisch wirkendes Steuerungssystem vorgesehen ist, kann mit einem wesentlich geringeren, von Hand aufzubringenden Kraftaufwand die gleiche Bremskraft erzeugt werden, wie dies bisher bei den bekannten Transportwagen üblich war. Im Falle einer Hülse läßt sich diese z.B. leichter verdrehen. Wird keine Hülse verwendet, ermöglicht die Erfindung eine Schiebeeinrichtung, die keine aufwendigen Hebelanordnungen aufweist. Da bei der zuletzt genannten Lösung die Längsachse der Schiebeeinrichtung gleichzeitig deren Schwenkachse ist, läßt sich eine feine Dosierung der aufzubringenden Bremskräfte besonders dann erzielen, wenn die Schiebeeinrichtung entlang ihrer Längsachse betrachtet einen nichtzylindrischen Querschnitt aufweist.

Die Erfindung wird anhand zweier Ausführungsbeispiele näher erläutert. Es zeigt
- Fig. 1: einen Transportwagen, dessen Betätigungsvorrichtung durch eine auf der Schiebeeinrichtung befindlichen Hülse gestaltet ist;
- Fig. 2 und Fig. 3: Einzelheiten der Schiebeeinrichtung und der Betätigungseinrichtung des Einkaufswagens gemäß Fig. 1;
- Fig. 4: einen Transportwagen, dessen Betätigungsvorrichtung durch die Schiebeeinrichtung gebildet ist sowie
- Fig. 5: einen Teil der Betätigungsvorrichtung des Transportwagens entsprechend Fig. 4.

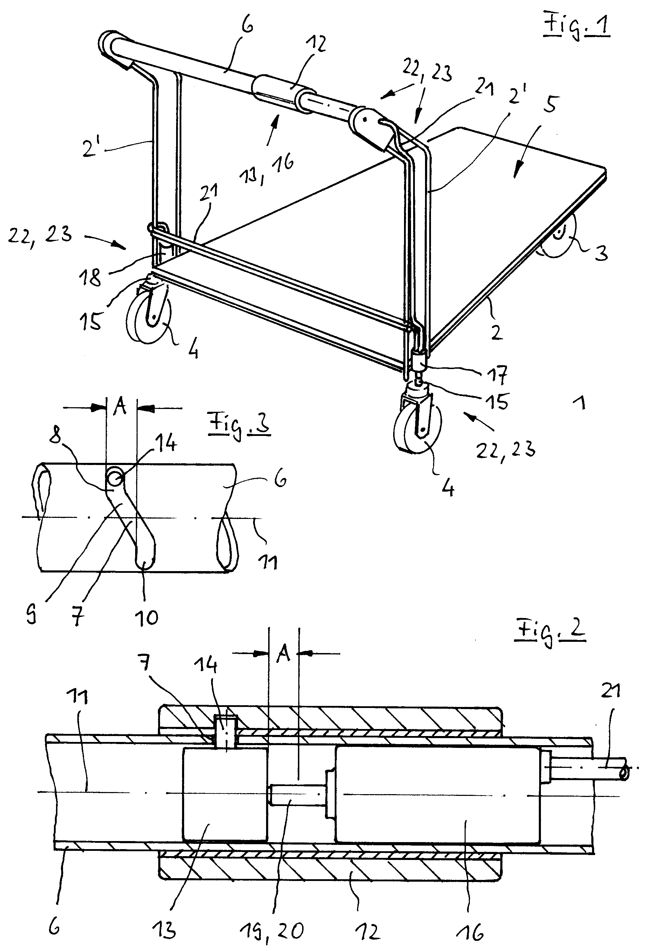

Der in Fig. 1 auf einfachste Bauweise reduziert dargestellte Transportwagen 1 steht stellvertretend für alle möglichen Transportwagen, Einkaufswagen oder Kofferkulis, die im Sinne der Erfindung Verwendung finden können. Solche von Hand bewegbaren, gewöhnlich stapelbaren Transportwagen 1 weisen wenigstens eine behälter- und/oder plattformartige Abstelleinrichtung 5 für zu transportierende Güter auf. Die mit wenigstens drei Fahrrollen 3, 4 ausgestatteten Transportwagen 1 tragen an ihrem hinteren Ende eine rohrförmige Schiebeeinrichtung 6, die in bekannter Weise entweder Bestandteil des Fahrgestelles 2 oder Bestandteil einer behälterartigen Abstelleinrichtung 5 ist. Im Beispiel wird die Schiebeeinrichtung 6 von zwei Trägern 2' gehalten, die ausgehend vom Fahrgestell 2 nach oben gerichtet sind. Die Schiebeeinrichtung 6 trägt eine hohlzylindrische Betätigungsvorrichtung 12 in Form einer Hülse, die koaxial zur Schiebeeinrichtung 6 angeordnet ist. die Betätigungsvorrichtung 12 ist mit einem hydraulisch wirkenden Steuerungssystem 23 gekoppelt, das, vgl. Fig. 2, einen ersten Hydraulikzylinder 16 aufweist, der in die rohrförmige Schiebeeinrichtung 6 eingefügt ist. Vom ersten Hydraulikzylinder 16 führt eine zur Aufnahme der Hydraulikflüssigkeit bestimmte Leitung 21 nach unten zu einem zweiten Hydraulikzylinder 17, der in Wirkverbindung mit einer Bremseinrichtung 15 steht, die auf eine erste der beiden hinteren Fahrrollen 4 einwirkt. Vom zweiten Hydraulikzylinder 17 führt eine weitere zur Aufnahme der Hydraulikflüssigkeit bestimmte Leitung 21 zu einem dritten Hydraulikzylinder 18, der ebenfalls in Wirkverbindung mit der Bremseinrichtung 15 steht und auf die andere der hinteren Fahrrollen 4 einwirkt. Die Hydraulikzylinder 16, 17, 18 sowie die Leitungen 21 und der in Fig. 2 beschriebene Drücker 13 werden hier als Kraftübertragungsmittel 22 bezeichnet, die zusammen mit der Bremseinrichtung 15 und der Betätigungsvorrichtung 12 Bestandteil des hydraulisch wirkenden Steuerungssystems 23 sind, mit dessen Hilfe die auf die hinteren Fahrrollen 4 einwirkenden Bremskräfte in ihrer Intensität veränderbar sind. Die auf jede hintere Fahrrolle 4 einwirkende federbeaufschlagte Bremseinrichtung 15, sowie die Fahrrollen 4 selbst, sind in ähnlicher Weise so gestaltet, wie dies im deutschen Gebrauchsmuster G 80 25 797 ausführlich beschrieben ist, jedoch mit dem Unterschied, daß nunmehr die Federn der Bremseinrichtung 15 bestrebt sind, die nicht näher dargestellten Bremsteile vom Rad der jeweiligen Fahrrolle 4 fernzuhalten. Im genannten Gebrauchsmuster hingegen wird das Bauteil von der Feder konstant gegen das Rad gedrückt. Die Hydraulikzylinder 16, 17, 18 sind als einseitig wirkende Zylinder gestaltet, wobei der zweite und dritte Hydraulikzylinder 17, 18 nahe einer jeden hinteren Fahrrolle 4 am Fahrgestell 2 ortsfest befestigt ist.

Fig. 2 zeigt einen Teil der Schiebeeinrichtung 6 nebst Betätigungsvorrichtung 12 und erstem Hydraulikzylinder 16 im Schnitt. In der rohrförmigen Schiebeeinrichtung 6 ist der erste Hydraulikzylinder 16 eingepaßt und gegen axiales Verschieben gesichert. Man erkennt rechts einen Teil der zum zweiten Hydraulikzylinder 17 führenden Leitung 21. Links ragt der Schaft 20 des Kolbens 19 aus dem ersten Hydraulikzylinder 16 hervor. An der Stirnseite des Schaftes 20 liegt ein Drücker 13 an, der drehbar in der Schiebeeinrichtung 6 eingesetzt ist und der einen Vorsprung 14 aufweist, welcher radial nach außen gerichtet ist, eine in der Schiebeeinrichtung 6 eingefräste Kulissenbahn 7 durchmißt und mit der Betätigungsvorrichtung 12 ortsfest verbunden ist. Die koaxial auf die Schiebeeinrichtung 6 aufgesetzte Betätigungsvorrichtung 12 besteht bevorzugt aus zwei zusammenfügbaren Hälften.

Fig. 3 zeigt in einer Draufsicht die Kulissenbahn 7. Sie weist einen senkrecht zur Längsachse 11 der Schiebeeinrichtung 6 angeordneten ersten Abschnitt 8 auf, der in einen schrägen zweiten Abschnitt 9 übergeht, an den sich wiederum ein senkrecht zur Längsachse 11 der Schiebeeinrichtung 6 angeordneter dritter Abschnitt 10 anschließt, so daß der erste Abschnitt 8 zum zweiten Abschnitt 9 um das Maß A versetzt angeordnet ist. Die Steigung des zweiten Abschnittes 9 ist so gewählt, daß eine Bewegung der Betätigungsvorrichtung 12 entlang der Längsachse 11 nur möglich ist, wenn die Betätigungsvorrichtung 12 gleichzeitig um die Längsachse 11 gedreht wird.

Anhand der Figuren 1 bis 3 läßt sich die Funktionsweise des hydraulisch wirkenden Steuerungssystems 23 des in Fig. 1 dargestellten Transportwagens 1 erklären. In nicht gebremster Lage nimmt die Betätigungsvorrichtung 12 eine Position ein, wie diese in Fig. 2 und 3 dargestellt ist, d.h., der Vorsprung 14 des Drückers 13 befindet sich im ersten Abschnitt 8 der Kulissenbahn 7. Dreht man die Betätigungsvorrichtung 12 gemäß der Zeichnung zum Betrachter und zum unteren Bildrand, so durchwandert der Vorsprung 14 den zweiten Abschnitt 9 und erreicht den dritten Abschnitt 10 der Kulissenbahn 7. Dabei wandert der Drücker 13 in der Zeichnung entlang der Längsachse 11 von links nach rechts, so daß der Kolben 19 des ersten Hydraulikzylinders 16 um das Maß A in dessen Zylindergehäuse gedrückt wird. Dies wiederum bewirkt, daß Hydraulikflüssigkeit vom ersten Hydraulikzylinder 16 in den zweiten Hydraulikzylinder 17 gedrückt wird und von diesem weiter in den dritten Hydraulikzylinder 18. Dies hat zur Folge, daß die Kolben 19 des zweiten und dritten Hydraulikzylinders 17, 18 entgegen der Federkraft der Bremseinrichtungen 15 nach unten gedrückt und damit die nach unten gerichteten Schäfte 20, die an je einem Bremsteil der Bremseinrichtung 15 stirnseitig anliegen, die Bremsteile gegen die Räder der Fahrrollen 4 drücken, so daß diese nicht mehr fahrbereit, also gebremst sind. Dreht man die Betätigungsvorrichtung 12 wieder zurück, drückt die Feder einer jeden Bremsvorrichtung 15 das jeweilige Bremsteil nach oben, so daß auch die Kolben 19 des zweiten und dritten Hydraulikzylinders 17, 18 wieder nach oben, also weiter in ihre Zylindergehäuse gedrückt werden. Dies hat zur Folge, daß Hydraulikflüssigkeit vom zweiten und dritten Hydraulikzylinder 17, 18 in den ersten Hydraulikzylinder 16 gedrückt wird, so daß der Schaft 20 des Kolbens 19 des ersten Hydraulikzylinders 16, dem Drücker 13 nachfolgend, mehr und mehr aus dem Zylindergehäuse herausgeführt wird. Je nachdem, welche Position die Betätigungsvorrichtung 12 also einnimmt, ist der Transportwagen 1 ungebremst, leicht, stärker oder total gebremst. Die Intensität der auf die hinteren Fahrrollen 4 einwirkenden Bremskräfte ist demnach veränderbar.

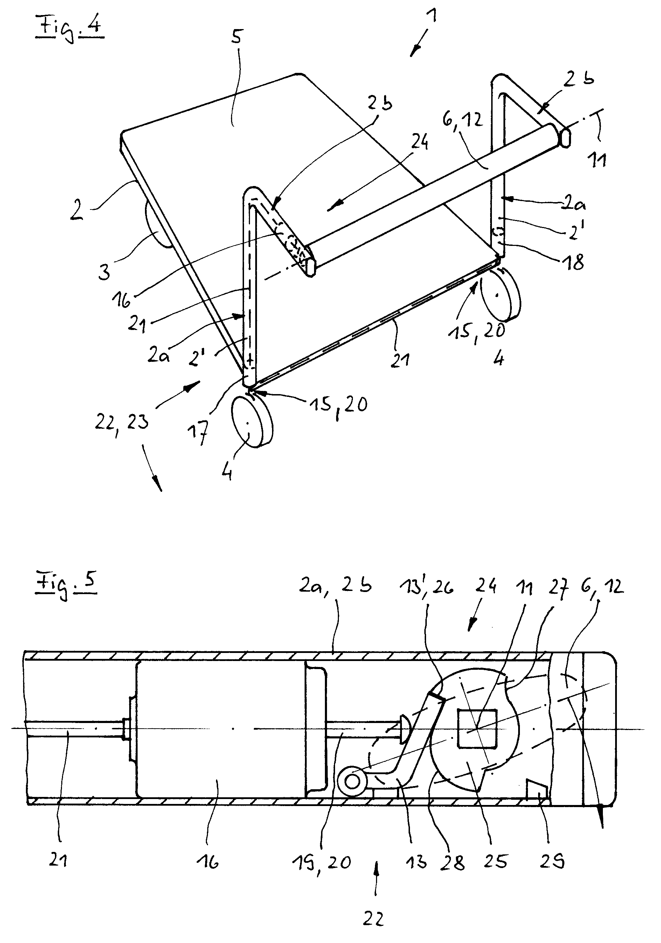

Der in Fig. 4 auf einfachste Bauweise reduziert dargestellte Transportwagen weist ebenfalls wenigstens eine behälter- und/ oder plattformartige Abstelleinrichtung 5 für zu transportierende Güter auf. Der mit mindestens drei Fahrrollen 3, 4 ausgestattete Transportwagen 1 trägt an seinem hinteren Ende eine Schiebeeinrichtung 6, die an zwei am Fahrgestell 2 befestigten, nach oben strebenden und anschließend nach rückwärts gerichteten Holmen 2' befestigt ist. In einem der nach rückwärts gerichteten Abschnitte 2b der Holme 2' ist ein Betätigungsmechanismus 24 vorgesehen. Der Betätigungsmechanismus 24 ist sowohl mit der Schiebeeinrtchtung 6, als auch mit einem hydraulisch wirkenden Steuerungssystem 23 gekoppelt, das einen ersten Hydraulikzylinder 16 aufweist, der sich in einem der beiden nach rückwärts gerichteten Holmabschnitte 2b befindet, vgl. Fig. 2. Vom ersten Hydraulikzylinder 16 führt eine zur Aufnahme der Hydraulikflüssigkeit bestimmte Leitung 21 nach unten zu einem zweiten Hydraulikzylinder 17, der in Wirkverbindung mit einer Bremseinrichtung 15 steht, die auf eine erste der beiden hinteren Fahrrollen 4 einwirkt. Vom zweiten Hydraulikzylinder 17 führt eine weitere zur Aufnahme der Hydraulikflüssigkeit bestimmte Leitung 21 zu einem dritten Hydraulikzylinder 18, der ebenfalls in Wirkverbindung mit der Bremseinrichtung 15 steht und auf die andere der hinteren Fahrrollen 4 einwirkt. Die Hydraulikzylinder 16, 17, 18, der Betätigungsmechanismus 24 sowie die Leitungen 21 und der in Fig. 5 beschriebene Drücker 13 werden bei diesem Ausführungsbeispiel ebenfalls als Kraftübertragungsmittel 22 bezeichnet, die zusammen mit der Bremseinrichtung 15 und der Schiebeeinrichtung 6 Bestandteil eines hydraulisch wirkenden Steuerungssystems 23 sind, mit dessen Hilfe die auf die hinteren Fahrrollen 4 einwirkenden Bremskräfte in ihrer Intensität veränderbar sind. Die auf jede hintere Fahrrolle 4 einwirkende federbeaufschlagte Bremseinrichtung 15, sowie die Fahrrollen 4 selbst, sind wieder in ähnlicher Weise so gestaltet, wie dies bereits im Ausführungsbeispiel Fig. 1 angedeutet und im deutschen Gebrauchsmuster G 80 25 797 ausführlich beschrieben ist, jedoch wieder mit dem Unterschied, daß die Federn der Bremseinrichtung 15 bestrebt sind, die nicht näher dargestellten Bremsteile vom Rad der jeweiligen Fahrrolle 4 fernzuhalten. Im genannten Gebrauchsmuster hingegen wird das Bremsteil von der Feder konstant gegen das Rad gedrückt. Die Hydraulikzylinder 16, 17, 18 sind als einseitig wirkende Zylinder gestaltet, wobei der zweite und dritte Hydraulikzylinder 17, 18 nahe einer jeden hinteren Fahrrolle 4 am Fahrgestell 2, insbesondere wie gezeichnet, innerhalb der senkrechten Holmabschnitte 2a, ortsfest befestigt sind. Die Schiebeeinrichtung 6 ist an den Holmabschnitten 2b um ihre Längsachse 11 verschwenkbar gelagert. Durch Verschwenken der Schiebeeinrichtung 6, siehe Pfeil, sind die Bremseinrichtungen 15 beeinflußbar.

In Fig. 5 ist der Betätigungsmechanismus 24 näher gezeigt. Im rückwärts gerichteten Abschnitt 2b eines der beiden Holme 2' ist der erste Hydraulikzylinder 16 eingepaßt. Der Schaft 20 des Kolbens 19 ragt aus dem Hydraulikzylinder 16 hervor. An der Stirnseite des Schaftes 20 liegt ein Drücker 13 an, der um eine waagrechte Achse als einarmiger Hebel gestaltet, verschwenkbar gelagert ist. Der Drücker 13 steht mit einem Exzenter 25 in Kontakt, der auf der Längsachse 11 angeordnet mit der Schiebeeinrichtung 6 drehfest verbunden ist. Der Exzenter 25 ist an seinem Umfang kulissenartig so gestaltet, daß beim Verschwenken der Schiebeeinrichtung 6 um deren Längsachse 11 der Exzenter 25 ebenfalls verschwenkt wird. Dadurch kann der Kolben 19 in den ersten Hydraulikzylinder 16 gedrückt werden, wobei sich der Kolben 19 von selbst wieder aus dem Hydraulikzylinder 16 bewegt, wenn die Schiebeeinrichtung 6 in die entgegengesetzte Richtung verschwenkt wird. In der Zeichnung sind die Umrisse des bevorzugt oval oder nichtzylindrisch gestalteten Querschnittes der Schiebeeinrichtung 6 dargestellt. Der Exzenter 25 besitzt einen ersten Anschlag 26, der an der Stirnseite 13' des Drückers 13 anschlägt. In dieser Lage ragt der Kolben 19 des ersten Hydraulikzylinders 16 am weitesten aus dem Hydraulikzylinder 16 heraus; die auf die hinteren Fahrrollen 4 wirkenden Bremsen sind gelöst. Schwenkt man die Schiebeeinrichtung 6 in Pfeilrichtung nach hinten und unten, so drückt der Vorsprung 28 des Exzenters 25 den Drücker 13 in der Zeichnung nach links. Dies hat zur Folge, daß der Kolben 19 in den Hydraulikzylinder 16 gedrückt wird, so daß die Bremseinrichtung 15 aktiviert wird. Die Schiebeeinrichtung 6, die somit gleichzeitig eine Betätigungsvorrichtung 12 für die Bremseinrichtung 15 bildet, kann so weit nach rückwärts (Pfeil) verschwenkt werden, bis ein zweiter am Exzenter 25 angeordneter Anschlag 27 an einen im Holmabschnitt 2b befindlichen Vorsprung 29 anstößt. Durch die beiden Anschläge 26 und 27 sowie durch die Stirnseite 13' des Drückers 13 und durch den Vorsprung 28 ist der Schwenkbereich der Schiebeeinrichtung 6 festgelegt.

Anhand der Figuren 4 und 5 läßt sich die Funktionsweise des hydraulisch wirkenden Steuerungssystems 23 des in Fig. 4 dargestellten Transportwagens 1 erklären. In nicht gebremster Lage des Transportwagens 1 nimmt die Schiebeeinrichtung 6 eine Lage ein, wie diese in Fig. 2 dargestellt ist. Schwenkt man die Schiebeeinrichtung 6 um ihre Längsachse 11 in der Zeichnung (Fig. 2) rechtsdrehend nach unten, so drückt der Vorsprung 28 des Exzenters 25 den Kolben 19 nach und nach in den ersten Hydraulikzylinder 16. Dies wiederum bewirkt, daß Hydraulikflüssigkeit vom ersten Hydraulikzylinder 16 in den zweiten Hydraulikzylinder 17 gedrückt wird und von diesem weiter in den dritten Hydraulikzylinder 18. Dies hat zur Folge, daß die Kolben 19 des zweiten und dritten Hydraulikzylinders 17, 18 entgegen der Federkraft der Bremseinrichtungen 15 nach unten gedrückt und damit die nach unten gerichteten Schäfte 20, die an je einem Bremsteil der Bremseinrichtung 15 stirnseitig anliegen, die Bremsteile gegen die Räder der Fahrrollen 4 drücken, so daß diese nicht mehr fahrbereit, also gebremst sind. Dreht man die Schiebeeinrichtung 6 wieder zurück, drückt die Feder einer jeden Bremsvorrichtung 15 das jeweilige Bremsteil nach oben, so daß auch die Kolben 19 des zweiten und dritten Hydraulikzylinders 17, 18 wieder nach oben, also weiter in ihre Zylindergehäuse gedrückt werden. Dies bewirkt, daß Hydraulikflüssigkeit vom zweiten und dritten Hydraulikzylinder 17, 18 in den ersten Hydraulikzylinder 16 gedrückt wird, so daß der Schaft 20 des Kolbens 19 des ersten Hydraulikzylinders 16, dem Drücker 13 nachfolgend, mehr und mehr aus dem Zylindergehäuse herausgeführt wird. Je nachdem, welche Position die Schiebeeinrichtung 6 also einnimmt, ist der Transportwagen 1 ungebremst, leicht, stärker oder total gebremst.

Es bleibt anzumerken, daß es natürlich möglich ist, die eben beschriebene Erfindung, ob mit oder ohne Verwendung einer Hülse 12 auf einen Transportwagen 1 zu übertragen, bei dem nur eine der hinteren Fahrrollen 4 gebremst werden soll. Es entfallen dann die zum Hydraulikzylinder 18 führende Leitung 21 und der dritte Hydraulikzylinder 18.

## Patentansprüche

1. Von Hand bewegbarer Transportwagen (1), mit wenigstens einer Abstelleinrichtung (5) für zu transportierende Güter, mit einer Schiebeeinrichtung (6), mit einer auf wenigstens eine der hinteren Fahrrollen (4) einwirkenden Bremseinrichtung (15) und mit Kraftübertragungsmitteln (22), die mit der Bremseinrichtung (15) und mit einer Betätigungsvorrichtung (12) so verbunden sind, daß durch Verschwenken der Betätigungsvorrichtung (12) um eine horizontale Achse die auf die wenigstens eine hintere Fahrrolle (4) einwirkenden Bremskräfte in ihrer Intensität veränderbar sind, dadurch **gekennzeichnet,** daß die Betätigungsvorrichtung (12) in an sich bekannter Weise durch eine auf der Schiebeeinrichtung (6) koaxial zu dieser angeordneten Hülse gebildet ist, daß die Bremseinrichtung (15), die Hülse und die Kraftübertragungsmittel (22) Bestandteil eines hydraulisch wirkenden Steuerungssystems (23) sind, das wenigstens zwei Hydraulikzylinder (16, 17) aufweist, wobei der Hydraulikzylinder (16) innerhalb der Schiebeeinrichtung (6) und der wenigstens eine weitere Hydraulikzylinder (17) außerhalb der Schiebeeinrichtung (6) am Transportwagen (1) angeordnet ist.

2. Transportwagen nach Anspruch 1, dadurch **gekennzeichnet,** daß die Kraftübertragungsmittel (22) einen auf den in der Schiebeeinrichtung (6) befindlichen Hydraulikzylinder (16) einwirkenden Drücker (13) aufweisen, der mit einem Vorsprung (14) ausgestattet ist und der mit der Betätigungsvorrichtung (12) ortsfest verbunden ist, wobei der Vorsprung (14) des in der Schiebeeinrichtung (6) beweglich gelagerten Drückers (13) in einer in der Schiebeeinrichtung (6) befindlichen Kulissenbahn (7) beweglich geführt ist.

3. Transportwagen nach Anspruch 1 oder 2, dadurch **gekennzeichnet,** daß die Kulissenbahn (7) einen senkrecht zur Längsachse (11) der Schiebeeinrichtung (6) angeordneten ersten Abschnitt (8) aufweist, der in einen schrägen zweiten Abschnitt (9) übergeht, an den sich wiederum ein senkrecht zur Längsachse (11) angeordneter dritter Abschnitt (10) anschließt.

4. Transportwagen nach einem der Ansprüche 1 bis 3, dadurch **gekennzeichnet,** daß der erste Abschnitt (8) vom dritten Abschnitt (10) um das Maß A versetzt angeordnet ist.

5. Transportwagen nach einem der Ansprüche 1 bis 4, dadurch **gekennzeichnet,** daß die Betätigungsvorrichtung (12) aus zwei zusammenfügbaren Hälften besteht.

6. Von Hand bewegbarer Transportwagen (1), mit wenigstens einer Abstelleinrichtung (5) für zu transportierende Güter, mit einer Schiebeeinrichtung (6), mit einer auf wenigstens eine der hinteren Fahrrollen (4) einwirkenden Bremseinrichtung (15) und mit Kraftübertragungsmitteln (22), die mit der Bremseinrichtung (15) und mit einer Betätigungsvorrichtung (12) so verbunden sind, daß durch Verschwenken der Betätigungsvorrichtung (12) um eine horizontale Achse die auf die wenigstens eine hintere Fahrrolle (4) einwirkenden Bremskräfte in ihrer Intensität veränderbar sind, dadurch **gekennzeichnet,** daß die Betätigungsvorrichtung (12) in an sich bekannter Weise durch die Schiebeeinrichtung (6) gebildet ist, wobei die zum Verschwenken der Betätigungsvorrichtung (12) vorgesehene horizontale Achse der Längsachse (11) der Schiebeeinrichtung (6) entspricht und daß die Bremseinrichtung (15), die Schiebeeinrichtung (6) und die Kraftübertragungsmittel (22) Bestandteil eines hydraulisch wirkenden Steuerungssystems (23) sind, das wenigstens zwei Hydraulikzylinder (16, 17) aufweist, die außerhalb der Schiebeeinrichtung (6) am Transportwagen (1) angeordnet sind.

7. Transportwagen nach Anspruch 6, dadurch **gekennzeichnet,** daß die Kraftübertragungsmittel (22) durch einen mit der Schiebeeinrichtung (6) drehschlüssig verbundenen Exzenter (25), einen mit dem Exzenter (25) in Kontakt stehenden Drücker (13), durch einen ersten Hydraulikzylinder (16), auf den der Drücker (13) einwirkt, sowie durch den wenigstens einen weiteren, auf die Bremseinrichtung (15) einwirkenden Hydraulikzylinder (17) gebildet ist.

8. Transportwagen nach Anspruch 6 oder 7, dadurch **gekennzeichnet,** daß der Exzenter (25) einen ersten, mit dem Drücker (13) zusammenwirkenden Anschlag (26) und einen zweiten, mit einem ortsfest angeordneten Vorsprung (29) in Funktion stehenden Anschlag (27) ausgestattet ist, durch welche der Schwenkbereich der Schiebeeinrichtung (6) festgelegt ist.

9. Transportwagen nach einem der Ansprüche 6 bis 8, dadurch **gekennzeichnet,** daß der Exzenter (25), der Vorsprung (29), der Drücker (13) sowie der erste Hydraulikzylinder (16) im Abschnitt (2b) eines der beiden Holme (2') angeordnet sind.

10. Transportwagen nach einem der Ansprüche 6 bis 9, dadurch **gekennzeichnet,** daß der zweite und der dritte Hydraulikzylinder (17, 18) in den Holmen (2') untergebracht sind.

11. Transportwagen nach einem der Ansprüche 6 bis 10, dadurch **gekennzeichnet,** daß der in Richtung Längsachse (11) betrachtete Querschnitt der Schiebeeinrichtung (6) nichtzylindrisch gestaltet ist.

12. Transportwagen nach einem der Ansprüche 1 bis 11, dadurch **gekennzeichnet,** daß die Hydraulikzylinder (16, 17, 18) als einseitig wirkende Zylinder gestaltet und durch Hydraulikleitungen (21) miteinander verbunden sind.

13. Transportwagen nach einem der Ansprüche 1 bis 12, dadurch **gekennzeichnet,** daß bei Einwirken der Bremseinrichtung (15) auf nur eine der hinteren Fahrrollen (4) nur die Hydraulikzylinder (16 und 17) vorgesehen sind.
